# EUROPEAN PATENT APPLICATION

(11) **EP 4 772 928 A1**
(43) Date of publication of application: **08.07.2026**
(21) Application number: 25150518.6
(22) Date of filing: 07.01.2025
(51) Int. Cl.: G02B 21/00

(54) **REMOVING PARTICLES DURING LASER-BASED SCANNING MICROSCOPY**

(71) Applicant: CellSense Technologies GmbH, 12489 Berlin (DE)
(72) Inventor: JÄHNKE, Torsten, Schulzendorf (DE); BEHME, Gerd, Berlin (DE)
(74) Representative: Steffens, Adrian

(57) **Abstract**

A method and a system for removing particles during laser-based scanning microscopy are disclosed. The method comprises: scanning a sample (12) in a medium (19) with focused laser light along a plurality of scanning areas (21) and thereby determining a plurality of measurement values, each indicating scattered light from a corresponding one of the scanning areas (21); determining an occurrence of a particle (30) in an active scanning area (22) based on comparing values of a measurement values subset which corresponds to a scanning areas subset (32) of spatially connected scanning areas containing the active scanning area (22); in reaction to having determined the occurrence of the particle (30) in the active scanning area (22), removing the particle (30) from the active scanning area (22), comprising one of: providing a relative movement of the focused laser light from the active scanning area (22) to outside the scanning areas subset (32) and subsequently lowering a laser power of the focused laser light below an optical trapping threshold, and lowering the laser power of the focused laser light below the optical trapping threshold and providing a flow of the medium (19) in the active scanning area (22).

## Description

The present disclosure refers to a method and system for removing particles during laser-based scanning microscopy.

### Background

Brillouin microscopy is an optical technique based on the principle of Brillouin scattering of light. This method is used to obtain information about mechanical properties of materials at the microscopic level. When light hits a material, it can interact with phononic vibrations (latent waves) of the material. This interaction leads to a frequency shift of the backscattered light, known as Brillouin shift. The frequency shift depends on the acoustic properties of the material. Brillouin microscopy is often used to study mechanical properties of samples, such as elasticity, viscosity, and stiffness. This technique is also used in biomedical research to study the properties of cells, tissues, and organisms.

Brillouin microscopy enables high spatial resolution, making it ideal for characterizing small samples. As the technique is based on the scattering of light, it is non-invasive and causes no damage to the samples. Another spectroscopic scanning technique for determining material properties makes use of Raman scattering.

### Summary

The focused laser light used for scanning may act as an optical trap and move unwanted particles along during scanning. This may lead to artifacts in resulting measurements. It is therefore an object of the present disclosure to provide a method and a system in which such artifacts may be efficiently avoided or corrected.

For solving the problem, a method and a system for removing particles during laser-based scanning microscopy are provided according to the independent claims. Further embodiments are disclosed in dependent claims.

According to an aspect of the invention, a method for removing particles (removing a particle) during laser-based scanning microscopy is provided. The method comprises:
- (raster) scanning (total scanning area comprising) a sample in a medium with focused laser light along a plurality of scanning areas and thereby determining a plurality of measurement values, each indicating scattered light from a corresponding one of the scanning areas;
- determining an occurrence (a presence) of a particle in an active scanning area (current scanning area, present scanning area) based on comparing values of a measurement values subset which corresponds to a scanning areas subset of spatially connected (consecutive) scanning areas, wherein the scanning areas subset contains the active scanning area;
- in reaction to having determined the occurrence of the particle in the active scanning area, removing the particle from the active scanning area, comprising one of:
   - providing a relative movement of the focused laser light from the active scanning area to outside the scanning areas subset and subsequently lowering a laser power of the focused laser light, preferably below an optical trapping threshold (such that the particle is not optically trapped), and
   - lowering the laser power of the focused laser light, preferably below the optical trapping threshold (such that the particle is not optically trapped), and providing a flow of the medium in the active scanning area.

Further, a system for removing particles during laser-based scanning microscopy is provided that is configured to carry out said method. The system may comprise at least one of a laser source, an optical fiber, an optical coupler, a beam splitter, a mirror, an objective, a sample container, a (sample) stage, an illumination unit, a condenser, a camera, a detector, and a data processing unit.

Scanning the sample in the medium with focused laser light along the plurality of scanning areas may comprise successively providing the focused laser light at (and/or moving the focused laser light to) each of the scanning areas and determining at least one (corresponding) measurement value for each of the scanning areas. For example, the focused laser light may be provided at and/or moved to a first scanning area and at least one first measurement value may be determined. Subsequently, the focused laser light may be provided at and/or moved to a second scanning area and at least one second measurement value may be determined. The preceding step may be repeated until at least one (corresponding) measurement value is determined for each of the scanning areas. The scanning of the sample may comprise scanning with a plurality of scan lines, each comprising multiple of the scanning areas. The scattered light may be scattered from the focused laser light in the corresponding one of the scanning areas, in particular in the active scanning area. The spatially connected scanning areas may be arranged as successive, neighboring scanning areas and/or be arranged in an uninterrupted sequence of scanning areas.

The method may further comprise at least one of aligning the focused laser light with an initially scanned area of the scanning areas subset, increasing the laser intensity (above the optical trapping threshold), and continuing scanning the sample from the initially scanned area of the scanning areas subset. Alternatively, the method may comprise at least one of aligning the focused laser light with the active scanning area, increasing the laser intensity (above the optical trapping threshold), continuing scanning the sample from the active scanning area, and interpolating the measurement values subset using neighboring measurement values adjacent to the measurement values subset. The neighboring measurement values may for example be included in a preceding scan line or a subsequent scan line.

Determining the occurrence of the particle in the active scanning area may comprise: determining that the particle is occurring in the active scanning area if selected values or all values of the measurement values subset (essentially) coincide (in other words, if the values of the measurement values subset are the same), or determining that the particle is occurring in the active scanning area if the selected or all the values of the measurement values subset deviate from each other (or from adjacent measurement values of the selected or all the values) by at most a first threshold and/or if the selected values or all the values of the measurement values subset deviate from a reference value by at most the first threshold. The reference value may be a mean value of (at least parts of) the measurement values subset.

Determining the occurrence of the particle in the active scanning area may comprise comparing a present value of the active scanning area with (all) further values of the measurement values subset, for example, with a mean value of (all) the further values of the measurement values subset.

The first threshold may correspond to at most 5 %, preferably at most 2 %, more preferably at most 1 %, more preferably at most 0.5 %, of the mean value of (at least parts of) the measurement values subset. The first threshold may depend a sample type and/or a medium type and/or the focused laser light. The first threshold may be user-adjustable.

The mean value may for example be an arithmetic mean value. The mean value may be recalculated after each re-alignment of the focused laser light to a further active scanning area.

The mean value may be a moving average. For example, a measurement value may be discarded from the measurement values subset and/or one of the spatially connected scanning areas may be discarded if the measurement value (the corresponding measurement value of the one of the spatially connected scanning areas) deviates by more than the first threshold and, in particular, if the one of the spatially connected scanning areas is an earliest scanned area of the scanning areas subset. A measurement value may be included in the measurement values subset and/or a further active scanning area be included in the scanning areas subset after re-alignment of the focused laser light to the further active scanning area.

Further, the mean value may be a moving average within the measurement values subset. In other words, the mean value may depend on an associated measurement value. For example, the mean value associated with one of the measurement values may be a mean of the one of the measurement values and at least one adjacent measurement value that is adjacent to the one of the measurement values. In particular, the mean value associated with the present value may be a mean of the present value and at least one previous measurement value corresponding to at least one previous scanning area scanned (directly, i.e. without further scanning area in-between) before the active scanning area.

The first threshold may be determined from an optical homogeneity of material in the spatially connected scanning areas of the scanning areas subset. For example, water as medium surrounding the sample may be optically homogeneous, while parts of the sample itself may be optically heterogeneous. The first threshold may increase with decreasing optical homogeneity. For example, the first threshold may be inversely proportional to an optical homogeneity value indicating the optical homogeneity of the material in the spatially connected scanning areas of the scanning areas subset.

The optical homogeneity may be determined from brightfield image information, in particular from a brightfield image, on the spatially connected scanning areas of the scanning areas subset. The brightfield image (information) may be determined by the camera. The optical homogeneity may be determined from color information and/or brightness information from the brightfield image information, in particular from a variance of the color information and/or a variance of the brightness information.

Determining the occurrence of the particle in the active scanning area may be further based on (in particular dependent on) the scanning areas subset having at least two, three, four, five, six, ten, 15, 20, 25, or 50 spatially connected scanning areas. In other words, the particle may be determined to be occurring in the active scanning area (only) if the scanning areas subset has at least two, three, four, five, six, ten, 15, 20, 25, or 50 spatially connected scanning areas. Thus, reaction time and sensitivity with respect to determining the occurrence of a particle can be balanced with robustness and speed of carrying out a scan.

Additionally or alternatively, determining the occurrence of the particle in the active scanning area may be based on (in particular dependent on) the scanning areas subset having an amount of spatially connected scanning areas of at least 1 %, preferably at least 2 %, more preferably at least 5 %, more preferably at least 10 %, of a number of scanning areas per scan line. In other words, the particle may be determined to be occurring in the active scanning area (only) if the scanning areas subset has an amount of spatially connected scanning areas of at least 1 %, preferably at least 2 %, more preferably at least 5 %, more preferably at least 10 %, of the number of scanning areas per scan line. The scanning areas subset may be located within one scan line.

The number of scanning areas (pixels) per scan line can be between 5 and 50 000. The number of scan lines per sample scan can be between 5 and 50 000. Hence, a scanning map for the sample may comprise between 5 x 5 and 50 000 x 50 000 scanning areas (pixels). Preferably, the system may comprise between 10 x 10 and 2 000 x 2 000 scanning areas. Each scanning area may have a length and/or a width between 0.1 µm and 2000 µm.

The focused laser light may for example (be configured to) induce inelastic light scattering, in particular Brillouin scattering or Raman scattering. The scattered light may thus indicate Brillouin scattering or Raman scattering. The focused laser light may also induce further types of inelastic light scattering.

The focused laser light may have a wavelength between 400 nm and 1 200 nm, preferably between 600 nm and 800 nm. More preferably, the focused laser light may have a wavelength between 770 and 790 nm. Thus, phototoxic irradiation can be avoided. The focused laser light may have a line width less than 1 MHz (corresponding to 2 fm in terms of wavelength at 780 nm central wavelength), preferably less than 100 kHz (corresponding to 0.2 fm in terms of wavelength at 780 nm central wavelength).

The focused laser light may have a laser power 1 mW and 300 mW, preferably between 10 mW and 200 mW (at the laser focus and/or laser spot and/or at the active scanning area).

The focused laser light may have a laser focus size / laser spot size (in particular, an 1/e² spot diameter) at the sample (in particular at the active scanning area) between 0.05 µm and 20 µm (preferably between 0.5 µm and 2.0 µm) and/or between 0.1 and 2 scanning areas lengths and/or between 0.1 and 2 scanning areas widths.

The focused laser light may be configured to act as optical trap and/or optical tweezers (e.g., for the particle). Lowering the laser intensity of the focused laser light (below the optical trapping threshold) may comprise switching off the focused laser light. Lowering the laser intensity of the focused laser light (below the optical trapping threshold) may also comprise lowering the laser intensity such that the particle is released and/or increasing a laser spot size of the focused laser light such that the particle is released.

The optical trapping threshold may indicate a threshold below which no optical trapping of particles takes place, in particular of particles with diameter from 100 nm to 20 µm. The optical trapping threshold may be between 1 and 20 mW.

The sample may be a biological sample, preferably comprising at least one of a cell, a part of a cell, cellular tissue, a spheroid, and an organoid. The medium may comprise or be a liquid. The medium may also comprise or be a gel. The medium may comprise at least one of a culture medium, a growth medium, a liquid nutrient medium, a lysogeny broth medium, agar, glucose, salts, water, and amino acids.

The particle may be one of a cell residue, cell debris, a tethered particle, a microbead (Ugel-stad particle), a microsphere, a carrier particle, a bacterium, a virus, a bottom coating residue, and an adhesive gel residue.

The microbead and/or the microsphere may be fluorescent (e.g., under UV light) and/or colored. The particle may comprise at least one of polyethylene and silicon. The particle may yield Brillouin scattered light or Raman scattered light (when illuminated by the focused laser light). The particle may be susceptible to be moved when illuminated by the focused laser light. The particle may have a diameter and/or length and/or width between 100 nm and 20 µm, preferably between 1 µm and 10 µm.

The relative movement of the focused laser light from the active scanning area outside the scanning areas subset may be provided such that the particle is moved from the active scanning area outside the scanning areas subset.

The relative movement of the focused laser light from the active scanning area to outside the scanning areas subset may be provided with a directional component orthogonal to a scan line direction (within/along a scanning areas plane, above the scanning areas plane, or below the scanning areas plane), in particular, be provided orthogonal to the scan line direction. The relative movement of the focused laser light from the active scanning area to outside the scanning areas subset may comprise a vertical and/or a horizontal directional component.

The relative movement of the focused laser light from the active scanning area to outside the scanning areas subset may comprise a relative movement to a region of already scanned scanning areas. For example, the particle may be moved by the focused laser light to an already scanned scan line. Alternatively, the relative movement of the focused laser light from the active scanning area may comprise a relative movement outside a total scanning area (for scanning the sample). The relative movement may be along the scanning areas plane, above the scanning areas plane, or below the scanning areas plane.

Starting providing the flow of the medium in the active scanning area may be subsequent to, simultaneous with, or ahead of lowering the laser power of the focused laser light below the optical trapping threshold. The flow may be provided for at least 0.1 s, at least 0.5 s, or at least 1.0 s while the laser power of the focused laser light is lowered (below the optical trapping threshold). The flow may be provided for at most 0.2 s, at most 1.0 s, or at most 2.0 s while the laser power of the focused laser light is lowered (below the optical trapping threshold).

Providing a flow of the medium in the active scanning area may comprise providing the flow of the medium such that the particle is moved out of the active scanning area. Providing a flow of the medium in the active scanning area may comprise providing the flow of the medium in the active scanning area with an average flow velocity above a second threshold, preferably of at least 0.1 µm/s, more preferably of at least 1 µms/s, more preferably of at least 10 µm/s. Providing the flow of the medium in the active scanning area may comprise providing the flow of the medium in the active scanning area with the average flow velocity below a third threshold, preferably of at most 1000 µm/s, more preferably of at most 100 µms/s.

The flow in the medium may be provided by a flow module arranged at the sample container. The flow module may comprise at least one of a medium inlet (for supplying the medium to the sample container), a medium outlet (for discharging the medium from the sample container), a pumping device, and a stirring device (for stirring the medium in the sample container). The flow module, in particular at least one of the medium inlet, the medium outlet, and the stirring device, may be controllable. For example, the flow module, in particular at least one of the medium inlet, the medium outlet, and the stirring device, may be connected to the data processing unit.

The laser source may be configured to provide laser light. The laser light and/or the backscattered light may pass at least one of the optical fiber, the optical coupler, the beam splitter, the mirror, and the objective. The backscattered light and/or background light (from the illumination unit, in particular the condenser, and passing the sample) may be received in the camera and/or the detector. The beamsplitter may be configured to direct the backscattered light and/or the background light towards the detector and/or the camera. The objective may comprise an objective lens. The objective may be configured to focus the laser light as focused laser light at the active scanning area. The objective may be further configured to provide image magnification, e.g., between 10x and 100x, preferably between 20x and 40x. A scanning time per scanning area may be between 1 ms and 10 s, preferably between 10 ms and 1 s.

The sample container may be configured to contain the sample. The sample container may for example be a Petri dish, a slide, a coverslip, a flow cell, a well plate, or a well from a well plate. The sample container may be arranged on the stage. The stage may be movable in two horizontal directions (which are orthogonal to each other). In other words, the stage may be movable in two directions parallel to a stage surface along which the stage extends. Alternatively, a microscope body and/or a casing below (or above) the stage may be movable in the two horizontal directions. The objective may be movable in a vertical direction (orthogonal to the two horizontal directions) and/or be movable in the two horizontal directions. At least one of the stage, the microscope body, the casing, and the objective may be manually movable or may be movable by a corresponding motor and/or piezo drive. An additional movement device may be arranged between the stage and the sample container (e.g., on the stage) for providing relative movement in a vertical direction and/or at least one horizontal direction.

The camera and/or the detector may be configured to receive and/or measure the scattered light (and/or parts of the scattered light). The camera may be configured for optical observation of the sample and/or used for control (in view of the optical observation). The detector may comprise at least one of a sensor (for receiving the scattered light) and a spectrometer (for analyzing spectral information of the scattered light). The sensor may, e.g., be a CMOS image sensor, in particular an sCMOS (scientific Complementary Metal-Oxide-Semiconductor) sensor, or an electron multiplier, in particular an electron-multiplying charge-coupled device (EMCCD). The detector may be connected to and/or communicatively coupled with the data processing unit.

The data processing unit may comprise at least one processor and at least one memory. The data processing unit may embodied in a single device. For example, the data processing unit may be a data processing device, such as a a computer. The data processing unit may also be distributed over a plurality of data processing devices.

The system may be arranged as an inverted microscope or as an upright microscope. In other words, the objective may be arranged below the stage or above the stage. The system may further be arranged as a confocal microscope.

Data processing steps described above may be carried out in the data processing unit, for example at least one of:
- determining the occurrence of the particle in the active scanning area based on comparing values,
- determining that a particle is occurring in the active scanning area,
- determining the first threshold, and
- determining the optical homogeneity.

At least one of the laser source, the mirror, the objective (in particular its movement), the stage (in particular, its movement), the detector, the camera, and the flow module may be controllable by and/or connected to the data processing unit.

The embodiments described above in connection with the method for removing particles during laser-based scanning microscopy may be provided correspondingly for the system for removing particles during laser-based scanning microscopy. In the context of this disclosure, interval information (e.g., "between ... and", "from ... to") is to be understood as including the interval ends.

### Brief description of drawings

In the following, embodiments, by way of example, are described with reference to drawings.
- Fig. 1: shows a graphical representation of a system for removing particles during laser-based scanning microscopy.
- Fig. 2a: shows a graphical representation of a scanning process of a sample.
- Fig. 2b: shows another graphical representation of the scanning process of a sample.
- Fig. 3a: shows a graphical representation of the scanning process including an artifact due to a particle.
- Fig. 3b: shows a graphical representation of the scanning process depicting the movement of the particle in a first step.
- Fig. 3c: shows a graphical representation of the scanning process depicting the movement of the particle in a second step.
- Fig. 4: shows an exemplary plot of measurement values as a result of scanning a sample.
- Fig. 5a: shows a graphical representation of removing the particle in a first step.
- Fig. 5b: shows a graphical representation of removing the particle in a second step.
- Fig. 5c: shows a graphical representation of removing the particle in a third step.
- Fig. 5d: shows a graphical representation of removing the particle in a fourth step.

### Detailed description

### Setup

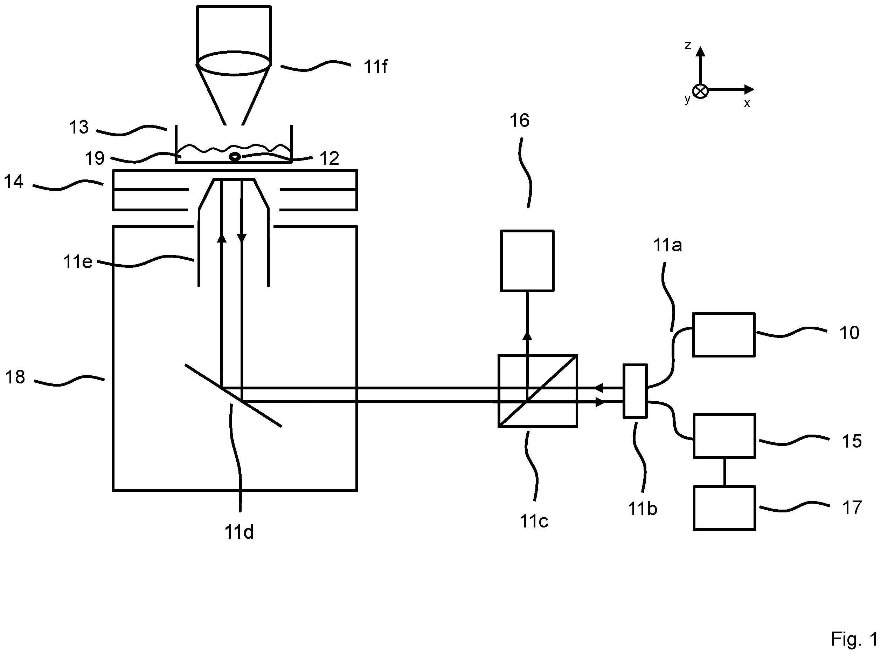

Fig. 1 shows a graphical representation of a system for removing particles during laser-based scanning microscopy. Laser light from a laser source 10, e.g., a laser, is directed via optical elements 11a-11e (in particular, an optical fiber 11a, an optical coupler 11b, a beam splitter 11c, a mirror 11d, and an objective 11e) towards a sample 12 (specimen) such as a cell in a medium 19 located in a sample container 13, e.g., a Petri dish, a slide, a well plate, or a well from a well plate. The sample container 13 is arranged on a stage 14, which is movable in an x- and a y-direction (parallel to a stage surface along which the stage 14 extends). The objective 11e, e.g., an objective lens, is movable in a z-direction (orthogonal to the surface along which the stage 14 extends) and provides focus for the laser light, resulting in focused laser light in scanning areas along the sample. Background light is provided from an illumination unit via a condenser 11f. Further mirror elements may be provided for aligning and/or directing laser light and/or scattered light.

Light passing the sample 12 or emitted by the sample 12 including scattered light passes the objective 11e and is fed to detector 15, comprising a spectrometer, and a (brightfield) camera 16 for optical observation and/or control. The detector 15 is connected with a data processing unit 17. Alternative to the stage 14 being movable, the objective 11e (together with mirror 11d) and a surrounding casing 18 may be movable in an x- and a y-direction.

The sample 12 may be observed from below with the objective 11e being arranged below the stage 14 (inverted microscope setup) as shown in Fig. 1. Alternatively, the sample 12 may be observed from above with the objective 11e being arranged above the stage 14 (upright microscope setup - not shown). An inverted microscope is beneficial when working with life samples at the bottom of the sample container 13, as it minimizes disturbances, e.g., due to light passing water.

For observing the sample 12 and for navigating, brightfield illumination may for example be used. Other contrast methods may be used such as differential interference contrast (DIC) or phase contrast which provide enhanced contrast for nearly optical transparent samples. When the sample 12 is illuminated, it becomes visible against the bright background, which allows for easy alignment and positioning during measurements. For moving the sample 12 relative to a fixed optical focus position in the horizontal (x-y-)plane, the stage 14 is manually movable or motorized. For focusing on a specific sample area in a vertical (z-)direction, a manual or a motorized focus drive may be provided for moving the objective 11e up or down with precise steps in the vertical direction. After finding an area of interest on the sample 12, the spectroscopic mapping can start.

The laser source 10 provides laser light with a wavelength suitable for Brillouin scattering (which for biological samples is typically near-infrared, e.g., 780nm) or Raman scattering.

The laser light is focused on the sample 12 by the objective 11e with, e.g. 20x or 40x magnification and a numerical aperture of 0.5. The laser light has a typical power of 10mW in the focus of the objective 11e. The detector 15 may comprise a sCMOS sensor or an EMCCD for capturing the scattered light. The detector 15 is configured to capture Brillouin scattered light or Raman scattered light, which will appear as frequency shifts from the laser light. The scattered light is analyzed using the spectrometer to, e.g. resolve Brillouin peaks associated with acoustic phonons in the sample 12. This data gives insights into mechanical properties of the sample 12. The determined frequency shifts are analyzed in the data processing unit 17 using appropriate software tools. Such an analysis allows for determining mechanical parameters such as the speed of sound and the viscoelastic properties of the sample 12. The combination of an inverted microscope setup with brightfield illumination and Brillouin or Raman scattering allows for studying the mechanical properties of samples 12 in a non-invasive manner.

### Scanning

A typical scanning map 20 of 100 x 100 scanning areas 21 (pixels) with a mash width of 1 µm has a 100 x 100 µm² mapping area. Scanning can be carried out by moving the stage 14 in a (raster) scanning manner. To this end, the stage 14 is motorized and controlled by software, e.g., in the data processing unit 17. There are different forms of motorized stages 14 with differences in motion controls, mechanical bearings or the choice of mechanical drive as well as the use of a positioning sensor system. For example, the stage 14 may be moved by a stepper motor, a linear motor, or a piezo drive. The stage 14 is configured to accommodate the sample container 13, e.g., a standard sample holder such as a microscope slide, a Petri dish, a coverslip, a well plate, or other fluid cells.

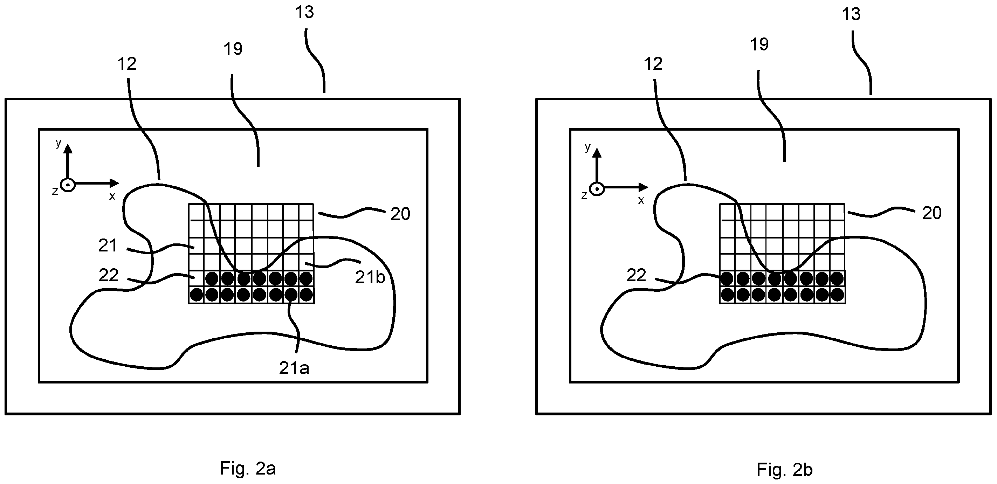

Fig. 2a and Fig. 2b show graphical representations of a scanning process along scanning areas 21 of a scanning map 20 of a sample 12. In the figures, already scanned scanning areas 21a are marked with black circles; not yet scanned scanning areas 21b are left empty. The focused laser light is focused in an active scanning area 22 (current scanning area, present scanning area) and corresponding scattered light from the active scanning area 22 is received in the detector 15.

For Brillouin scattering, a scanning time and/or an integration time per scanning area 20 is generally in the order of 0.1 s to 1.0 s depending on the received number of scattered photons. This is due to the lower probability of a Brillouin scattering process compared to, e.g., Rayleigh scattering. After a required amount of scattered photons (in total and/or per peak) has been received in the detector 15, corresponding (spectral) peaks are fitted (e.g., using Lorenz curves). Subsequently, distances (shifts) between one or more inelastic peaks (e.g., Stokes peak and Anti-Stokes peak) to the elastic (main) peak are determined, e.g., with respect to respective full width at half maximum values. For each scanning area 21, the corresponding measurement value or the corresponding measurements values are determined from the distances (shifts).

After scanning of the active scanning area 22 is completed (cf. Fig. 2b), a corresponding measurement value has been determined, and the focused laser light is moved to (aligned with) a further active scanning area, which is subsequently scanned.

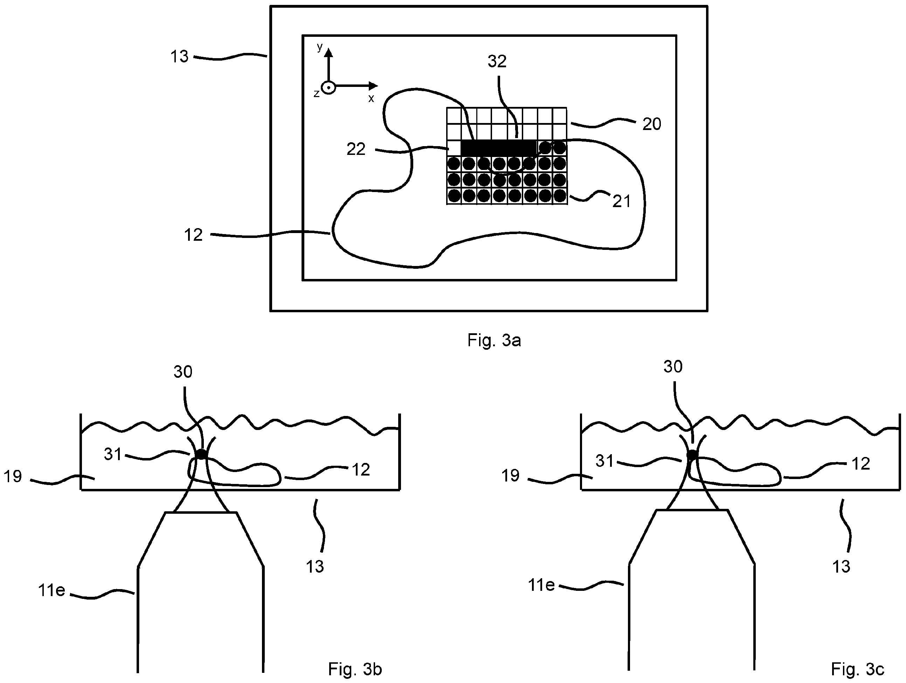

During scanning, artifacts in the measurement values can occur due to unwanted particles 30. This may particularly happen for biological samples in liquid. Fig. 3a shows a graphical representation of the scanning process including an artifact due to a particle 30. When for example scanning in a sample container 13 filled with a medium 19 such as buffer solution to keep cells alive or hydrated, debris may also occur in the medium 19. The debris such as dead material or dirt may diffuse in the medium 19 and corresponding particles 30 can be picked up and trapped by a laser focus 31 during scanning.

For Brillouin scattering and Raman scattering, the focused laser light has enough laser power to act as an optical trap / as optical scissors. As a result, if the particle 30 is in the laser focus 31, it moves together with the focused laser light from the active scanning area 22 to the next (further) active scanning area (cf. Fig. 3b and Fig. 3c).

As a result, the measurement values are mainly determined from the particle 30 in the laser focus 31 instead of the sample 12 itself. Due to the small dimensions of the particle 30 and its often high optical transparency, it can generally not easily be decided optically (e.g., via a brightfield image of the camera 16) if the laser has picked such a particle 30 or not. However, since the particle 30 and its scattering properties regularly do not vary much, the measurement values from the same particle 30 tend to be very similar. As a result, a scanning areas subset 32 of spatially connected scanning areas 21 is formed for which the measurement values essentially coincide or deviate from each other only by a small amount (cf. Fig. 3a). It can generally be determined after at least two consecutively coinciding/similar scanning areas 21, preferably after at least 4 to 6 consecutively coinciding/similar scanning areas 21, if there is a particle 30 trapped in the laser focus 31 or not.

To this end, the determining of an occurrence of the particle 30 in the active scanning area 22 is based on comparing values of a measurement values subset which corresponds to the scanning areas subset 32 of spatially connected (consecutive) scanning areas 21. The scanning areas subset 32 contains the active scanning area 22 as the last (latest) scanning area 21. It is determined that a particle is occurring in the active scanning area 22 if selected values of the measurement values subset 32 coincide or deviate from each other by at most a first threshold, e.g., 2 % of a mean value of the selected values.

For scanning areas within a medium 19 such as water, one expects same values for the pixels but not in the heterogenous samples areas. Such a knowledge can be determined from the brightfield image via the camera 16 (using the background light) and used for determining if the scanning area 22 covers a homogeneous region, such as the medium 19, or a heterogeneous medium, such as parts of the sample 12.

In case of a heterogeneous region, the values of the measurement values subset may include long-range fluctuations (such as a linear or low-frequency periodic trend) spanning over the entire measurement values subset 32. In this case, the mean value may depend on the neighboring values of the measurement values subset. The mean value may for example be a moving average. Further, the first threshold may be increased for heterogeneous regions. For homogeneous regions, the first threshold may be decreased.

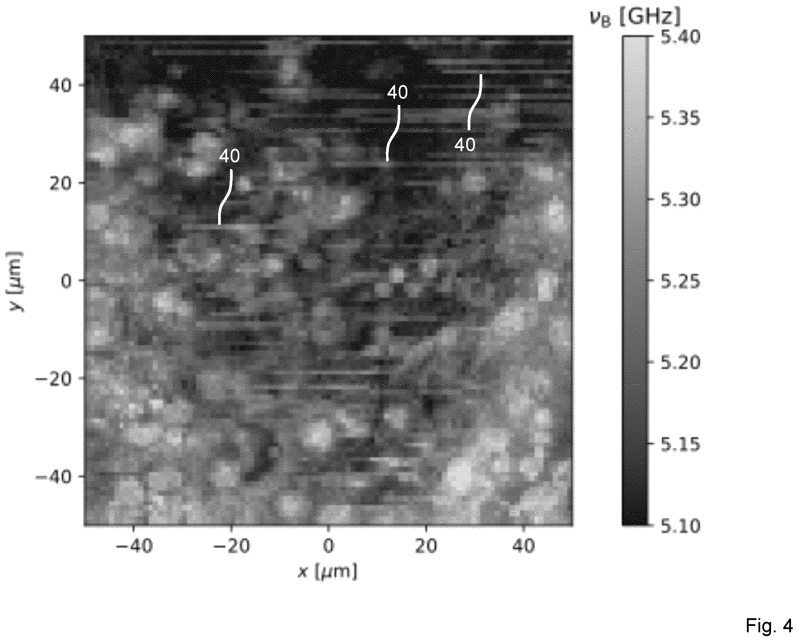

For illustrating scanning areas subsets 32 occurring in Brillouin measurements, Fig. 4 shows an exemplary plot of measurement values - Brillouin shift values *v*_{B} - as a function of first horizontal position x and second horizontal position y. In the plot, lines 40 correspond to scanning areas subsets 32 with similar measurement values, which respectively indicates the occurrence of a particle 30.

### Particle removal

After detecting the particle 30 in the laser focus 31, the particle 30 is removed and the scanning areas subset 32 is scanned again. Alternatively, the scanning areas subset 32 is interpolated using neighboring measurement values adjacent to the measurement values subset.

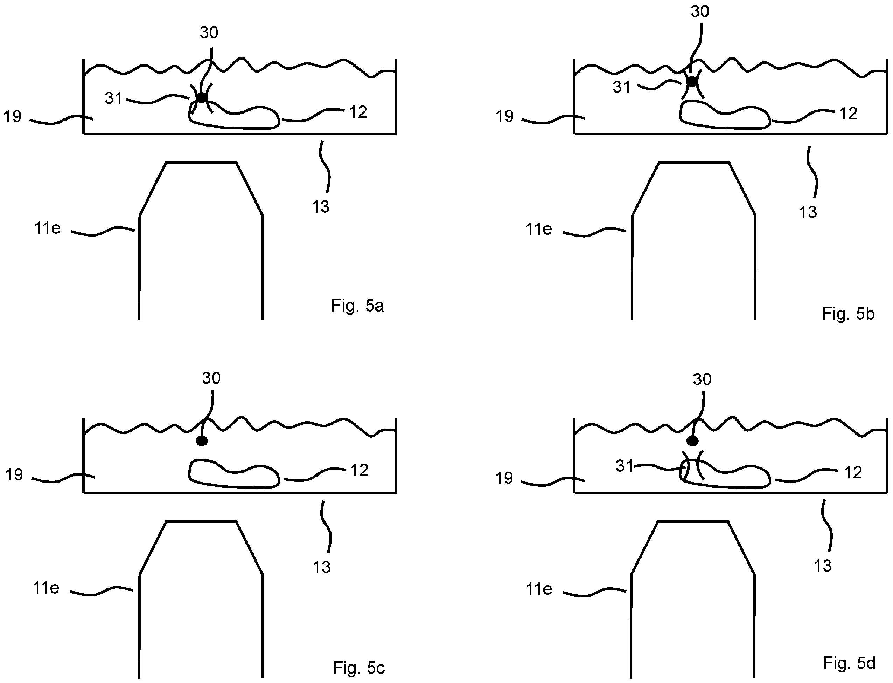

Fig. 5a to Fig. 5d show graphical representations of removing the particle 30 in four steps. Removing the particle 30 may be carried out by moving the laser focus 31 relative to the sample in *x* direction, *y* direction, *z* direction, or a combined direction over a distance of several microns. Since the particle 30 in the laser focus 31 moves with the laser focus 31, the particle 30 is moved to another location of the sample container 13. In case the of a laser focus size of 1 µm, the particle 30 should be moved by at least 1 µm.

Preferred is a movement in a vertical direction to the scanning areas plane (Fig. 5b). When the laser focus 31 has been moved with the particle 30 to the position of choice, the laser power (laser intensity with fixed surface area) is lowered so that an optical force in the laser focus 31 to too small to trap the particle 30 (Fig. 5c). In particular, the focused laser light can be switched off, e.g., by a shutter. Subsequently, the laser focus 31 is moved back to the latest scanning position, i.e., the active scanning area 22, the laser power is increased or the laser light is switched on and the scanning continues (Fig. 5d).

An alternative way for removing the particle 30 is to lower or switch off the laser power and use a flow of the medium 19 to move the particle 30. This can be done by using a flow cell as the sample container 13, a syringe (pump), or another fluid pump system to exert flow in the sample container 13, which flushes away the particle from the active scanning area 22.

After removing the particle 30, the measurement values of the scanning areas subset 32 are again determined. In one embodiment, the focused laser light is aligned with an initially scanned area of the scanning areas subset 32, scanning the sample is continued from there. Alternatively, the scanning continues from the active scanning area 22 and the measurement values subset 32 is interpolated using neighboring measurement values adjacent to the measurement values subset 32.

The features disclosed in this specification, the figures and/or the claims may be material for the realization of various embodiments, taken in isolation or in various combinations thereof.

### Reference signs

- 10: laser source
- 11a: optical fiber
- 11b: optical coupler
- 11c: beam splitter
- 11d: mirror
- 11e: objective
- 12: sample
- 13: sample container
- 14: stage
- 15: detector
- 16: camera
- 17: data processing unit
- 18: casing
- 19: medium
- 20: scanning map
- 21: scanning area
- 21a: already scanned scanning area
- 21b: not yet scanned scanning area
- 22: active scanning area
- 30: particle
- 31: laser focus
- 32: scanning areas subset
- 40: lines

## Claims

1. A method for removing particles during laser-based scanning microscopy, the method comprising:
- scanning a sample (12) in a medium (19) with focused laser light along a plurality of scanning areas (21) and thereby determining a plurality of measurement values, each indicating scattered light from a corresponding one of the scanning areas (21);
- determining an occurrence of a particle (30) in an active scanning area (22) based on comparing values of a measurement values subset which corresponds to a scanning areas subset (32) of spatially connected scanning areas containing the active scanning area (22);
- in reaction to having determined the occurrence of the particle (30) in the active scanning area (22), removing the particle (30) from the active scanning area (22), comprising one of:
- providing a relative movement of the focused laser light from the active scanning area (22) to outside the scanning areas subset (32) and subsequently lowering a laser power of the focused laser light below an optical trapping threshold, and
- lowering the laser power of the focused laser light below the optical trapping threshold and providing a flow of the medium (19) in the active scanning area (22).

2. The method according to claim 1, further comprising:
- aligning the focused laser light with an initially scanned area of the scanning areas subset (32), increasing the laser intensity above the optical trapping threshold, and continuing scanning the sample (12) from the initially scanned area of the scanning areas subset (32) or
- aligning the focused laser light with the active scanning area (22), increasing the laser intensity above the optical trapping threshold, continuing scanning the sample (12) from the active scanning area (22), and interpolating the measurement values subset using neighboring measurement values adjacent to the measurement values subset.

3. The method according to any of the preceding claims, wherein determining the occurrence of the particle (30) in the active scanning area (22) comprises:
- determining that the particle (30) is occurring in the active scanning area (22) if selected values of the measurement values subset coincide or
- determining that the particle (30) is occurring in the active scanning area (22) if selected values of the measurement values subset deviate from each other by at most a first threshold.

4. The method according to claim 3, wherein the first threshold corresponds to at most 5 % of a mean value of at least parts of the measurement values subset.

5. The method according to claim 4, wherein the mean value is a moving average.

6. The method according to any of claims 3 to 5, wherein the first threshold is determined from an optical homogeneity of material in the spatially connected scanning areas of the scanning areas subset (32).

7. The method according to claim 6, wherein the optical homogeneity is determined from brightfield image information on the spatially connected scanning areas of the scanning areas subset (32).

8. The method according to any of the preceding claims, wherein determining the occurrence of the particle (30) in the active scanning area (22) is dependent on the scanning areas subset (32) having at least three spatially connected scanning areas.

9. The method according to any of the preceding claims, wherein focused laser light induces one of Brillouin scattering and Raman scattering.

10. The method according to any of the preceding claims, wherein the sample (12) is a biological sample comprising at least one of a cell, a part of a cell, cellular tissue, and an organoid.

11. The method according to any of the preceding claims, wherein the particle (30) is one of a cell residual, cell debris, a microbead, a microsphere, a bacterium, a bottom coating residue, and an adhesive gel residue.

12. The method according to any of the preceding claims, wherein the relative movement of the focused laser light from the active scanning area (22) to outside the scanning areas subset (32) comprises at least one of the following:
- a directional component orthogonal to a scan line direction,
- a relative movement to a region of already scanned scanning areas (21a), and
- a relative movement outside a total scanning area for scanning the sample (12).

13. The method according to any of the preceding claims, wherein providing a flow of the medium (19) in the active scanning area (22) comprises providing the flow of the medium (19) in the active scanning area (22) with an average flow velocity of at least 10 µm/s.

14. The method according to any of the preceding claims, wherein the flow of the medium (19) in the active scanning area (22) is provided by a flow module comprising at least one of a medium inlet, a medium outlet, a pumping device, and a stirring device.

15. A system for removing particles during laser-based scanning microscopy configured to carry out the method according to any of the preceding claims.
